# EUROPEAN PATENT APPLICATION

(11) **EP 1 281 990 A1**
(43) Date of publication of application: **05.02.2003**
(21) Application number: 02016898.5
(22) Date of filing: 31.07.2002
(51) Int. Cl.: G02B 6/255, G02B 6/26, G02B 6/32, G02B 6/42

(54) **Single mode optical fibre coupled to spacer element and graded index fibre**

(30) Priority: 03.08.2001 JP 2001236017
(71) Applicant: JAPAN AVIATION ELECTRONICS INDUSTRY, LIMITED, Shibuya-ku, Tokyo 150-0043 (JP)
(72) Inventor: Kato, Yoshichika, Japan Aviation Electr. Ind. Ltd., Tokyo 150-0043 (JP)
(74) Representative: Hoffmann, Eckart, Dipl.-Ing.

(57) **Abstract**

There are provided an optical fiber having a light focusing function and capable of setting the distance WD to the beam waist position and the beam waist diameter ω independently, and a method of manufacturing the optical fiber efficiently and at high accuracy. An end surface of a single mode optical fiber (11) is connected to one end surface of a very short piece of spacer (13) constituted of an optical fiber the diameter of which is identical to that of the single mode optical fiber and the refractive index of which is uniform. The other end surface of the spacer is connected to one end surface of a very short piece of graded index optical fiber (12) the diameter of which is identical to that of the single mode optical fiber and the refractive index of which varies continuously in the direction of its diameter. The lengths of the spacer and/or the GI fiber can be adjusted to set the beam waist distance WD and the beam waist diameter ω to a proper value suitable for an optical device to be optically coupled to the optical fiber.

## Description

### BACKGROUND OF THE INVENTION

### 1. Field of the Invention

The present invention relates to an optical fiber having its end provided with a light converging or focusing function, the end being to be connected to an optical device, and a method of manufacturing the optical fiber, and more particularly, to such optical fiber having a light converging function to which a specified optical device can be optically coupled at the minimum of optical loss, and a method of manufacturing such optical fiber efficiently and at high accuracy.

### 2. Description of the Related Art

A technical concept in which a light converging or focusing function is added to an end of an optical fiber that is to be connected to an optical device such as a light source, a light receiving device or element, an optical modulator, an optical switch or the like has been heretofore proposed. For example, Japanese Patent Application Public Disclosure No. hei 3-189607 (189607/1991) discloses an optical fiber having a light converging or focusing function in which an end of a single mode optical fiber is provided with a graded index optical fiber (hereinafter, referred to as GI fiber) connected thereto, the GI fiber having such refractive index in its core portion varying continuously in the direction of its diameter.

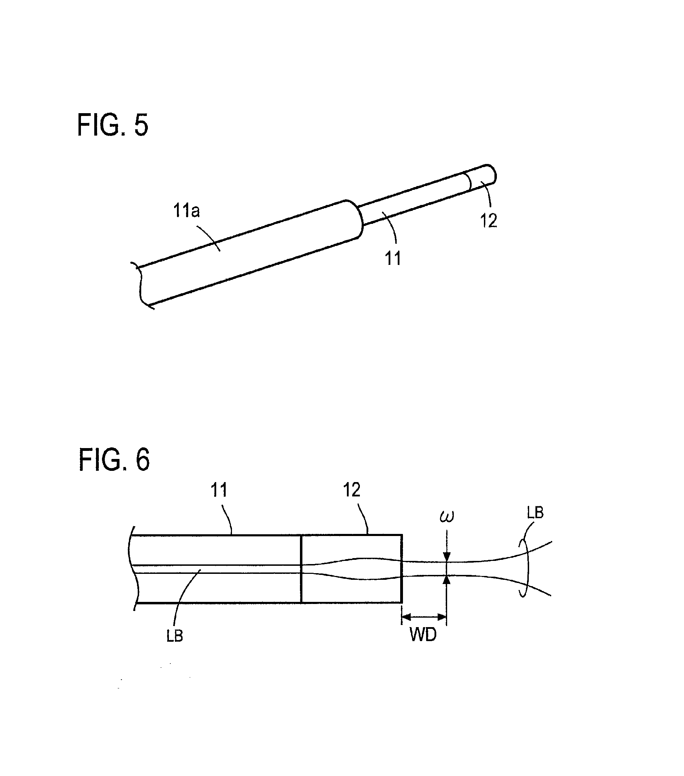

The optical fiber disclosed in the Japanese Patent Application Public Disclosure No. 189607/1991 has a light converging or focusing function by, as shown in Fig. 5, connecting a GI fiber 12 to the end surface of a single mode optical fiber 11 by fusion splice or use of a suitable adhesive, thereafter cutting the GI fiber 12 off to obtain a very short piece of GI fiber having a predetermined length, and utilizing the very short piece of GI fiber 12 as a rod lens (cylindrical lens). Further, in Fig. 5, a reference character 11a denotes a jacket of the single mode optical fiber 11.

Fig. 6 is an illustration for explaining a propagation manner of a light beam that propagates through the optical fiber having the structure shown in Fig. 5. As is apparent from Fig. 6, when the light beam LB advances through the GI fiber 12 from the single mode optical fiber 11, the light beam LB gradually spreads at first and then is focused due to lens action of the GI fiber 12, and is emitted to the outside from the end surface of the GI fiber 12. The light beam LB emitted to the outside from the end surface of the GI fiber 12 has its beam waist at the position (the focal plane) that is a predetermined distance WD away from the end surface of the GI fiber 12. Further, in Fig. 6, a reference character ω denotes the diameter of the beam waist.

Meanwhile, in order to optically couple the optical fiber having the structure described above to a desired optical device at the minimum of optical loss, in other words, in order to improve the efficiency of optical coupling between the optical fiber and the optical device, it is desirable that the optical device is located at the beam waist position (the position that is the distance WD away from the end surface of the GI fiber 12) and is optically coupled to the optical fiber. Since the beam waist position is determined depending upon the length of the GI fiber 12 acting as a lens, there occurs the necessity to adjust the beam waist position in consequence of kind, type and size (shape, configuration and dimension) of the optical device.

The adjustment of the beam waist position may be performed by varying the length of the GI fiber 12. However, when the length of the GI fiber 12 is varied, not only the beam waist position is changed but also the beam waist diameter ω is changed. In other words, in the prior art optical fiber shown in Fig. 5, only the length of the GI fiber 12 forms a parameter, and hence, if the length of the GI fiber 12 is varied, the beam waist position and the beam waist diameter ω are changed together in the interlocking manner.

For this reason, even if the length of the GI fiber 12 should be varied so as to conform to the kind, type and size of an optical device that is optically coupled to the optical fiber and the distance WD to the beam waist position should be set to the required value, there are often the cases that the beam waist diameter ω changed in the interlocking manner is not proper to that optical device. As a result, there is a shortcoming that the satisfactory optical coupling condition cannot be obtained between the optical fiber and the optical device only by varying the length of the GI fiber 12 to adjust the beam waist position.

### SUMMARY OF THE INVENTION

It is an object of the present invention to provide an optical fiber having a light converging function in which the proper beam waist position and the proper beam waist diameter conforming to an optical device to be optically coupled to the optical fiber can easily be set.

It is another object of the present invention to provide a method of manufacturing an optical fiber having the proper beam waist position and the proper beam waist diameter with ease and accurately at high precision.

In order to accomplish the foregoing objects, in a first aspect of the present invention, there is provided an optical fiber having a light converging function which comprises: a single mode optical fiber; a very short piece of spacer having a set length, one end surface of which is connected to an end surface of the single mode optical fiber, the very short piece of spacer being constituted of an optical fiber the diameter of which is identical to that of the single mode optical fiber and the refractive index of which is uniform; and a very short piece of graded index optical fiber having a set length, one end surface of which is connected to the other end surface of the spacer, the graded index optical fiber having its diameter identical to that of the single mode optical fiber, and having the refractive index that varies continuously in the direction of its diameter.

In a second aspect of the present invention, there is provided an optical fiber having a light converging function which comprises: a multi-core single mode optical fiber in which a plurality of single mode optical fibers are juxtaposed in parallel with one another and are formed into one body by covering the single mode optical fibers with a jacket; a plurality of very short pieces of spacers each of which has one end surface connected to an end surface of corresponding one of the single mode optical fibers, the very short pieces of spacers being constituted of a plurality of optical fibers each of which has a set length, has its diameter identical to that of corresponding one of the single mode optical fibers, and has its refractive index that is uniform; and a plurality of very short pieces of graded index optical fibers each of which has one end surface connected to the other end surface of corresponding one of the plurality of spacers, each graded index optical fiber having a set length, having its diameter identical to that of corresponding one of the single mode optical fibers, and having its refractive index that varies continuously in the direction of its diameter.

In a third aspect of the present invention, there is provided a method of manufacturing an optical fiber having a light converging function, which comprises the steps of: a first step of connecting one end surface of a spacer that is constituted by an optical fiber the refractive index of which is uniform and the length of which is sufficiently longer than a set length and one end surface of a graded index optical fiber the refractive index of which varies continuously in the direction of its diameter and the length of which is sufficiently longer than a set length with each other; a second step of cutting the spacer off so as to have a set length; a third step of connecting an end surface of a single mode optical fiber to the cut end surface of the spacer; and a fourth step of cutting the graded index optical fiber off so as to have a set length.

In a fourth aspect of the present invention, there is provided a method of manufacturing an optical fiber having a light converging function, which comprises the steps of: a first step of connecting respective one end surfaces of a plurality of spacers that are constituted by a plurality of optical fibers the refractive index of each of which is uniform and the length of each of which is sufficiently longer than a set length and corresponding one end surfaces of a plurality of graded index optical fibers the refractive index of each of which varies continuously in the direction of its diameter and the length of each of which is sufficiently longer than a set length with each other; a second step of cutting the plurality of spacers off so as for each spacer to have a set length; a third step of connecting respective end surfaces of a plurality of single mode optical fibers in a multi-core single mode optical fiber in which the plurality of single mode optical fibers are juxtaposed in parallel with one another and are formed into one body by covering the single mode optical fibers with a jacket to the corresponding cut end surfaces of the plurality of spacers; and a fourth step of cutting the plurality of graded index optical fibers off so as for each graded index optical fiber to have a set length.

It is preferable that the aforesaid plurality of spacers is constituted by a multi-core optical fiber in which a plurality of optical fibers, each having its refractive index that is uniform and its length that is sufficiently longer than a set length, are juxtaposed in parallel with one another and are formed into one body by covering the plurality of optical fibers with a jacket.

It is also preferable that the aforesaid plurality of graded index optical fibers is constituted by a multi-core graded index optical fiber in which a plurality of graded index optical fibers, each having its refractive index that varies continuously in the direction of its diameter and its length that is sufficiently longer than a set length, are juxtaposed in parallel with one another and are formed into one body by covering the plurality of graded index optical fibers with a jacket.

Further, it is preferable that the plurality of spacers and the plurality of graded index optical fibers have the same multi-core structure which is the same as that of the multi-core single mode optical fiber.

According to the present invention, since the lengths of the spacer and the GI fiber can be varied independently, the extent of freedom to set the distance WD to the beam waist position and the beam waist diameter ω is highly increased. Moreover, the scope of designs for the distance WD and the beam waist diameter ω widens out. As a result, the distance WD and the beam waist diameter ω can be set to proper values at high accuracy corresponding to or conforming to the kind, type and size of an optical device to be optically coupled to this optical fiber. In addition, since the optical fiber and the optical device can be optically coupled to each other at the minimum of optical loss, the optical coupling efficiency therebetween can be improved.

Moreover, since the length of each of the spacer and the GI fiber can be measured from the connection interface between the spacer and the GI fiber as a datum point, the spacer and the GI fiber can be cut off so as to have their set lengths with ease and accurately at high precision. In addition, the connecting steps and the cutting steps are performed by using the spacer and the GI fiber that are sufficiently longer than their set lengths respectively, and hence the works and/or operations thereof are easy, which results in an improvement in the manufacturing efficiency.

### BRIEF DESCRIPTION OF THE DRAWINGS

Fig. 1 is a perspective view showing a first embodiment of the optical fiber according to the present invention;
Fig. 2 is an illustration for explaining a propagation manner of the light beam propagating through the optical fiber shown in Fig. 1;
Figs. 3A, 3B, 3C and 3D are diagrammatical side views for explaining one embodiment of the method of manufacturing an optical fiber according to the present invention in order of process steps;
Fig. 4 is a perspective view showing a second embodiment of the optical fiber according to the present invention;
Fig. 5 is a perspective view showing an example of the prior art optical fiber having a light converging function; and
Fig. 6 is an illustration for explaining a propagation manner of the light beam propagating through the optical fiber shown in Fig. 5.

### DETAILED DESCRIPTION OF THE PREFERRED EMBODIMENTS

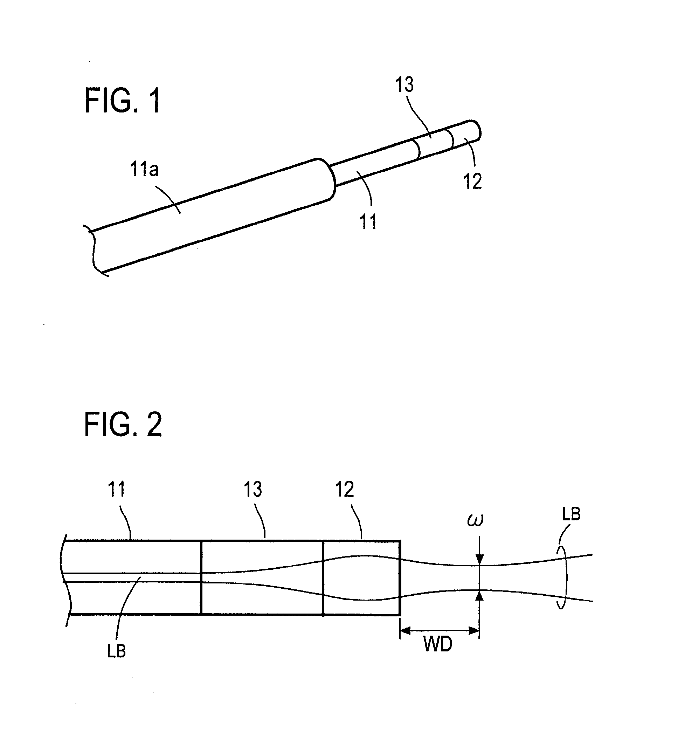

The preferred embodiments of the present invention will now be described in detail with reference to Figs. 1 to 4. The present invention may, however, be embodied in many different forms and should not be construed as limited to the embodiments set forth hereinafter; rather, the embodiments are provided so that this disclosure will be thorough and complete, and will fully convey the scope of the invention to those skilled in the art.

Fig. 1 is a perspective view showing a first embodiment of the optical fiber according to the present invention, and particularly, shows the structure of an end portion thereof. The end portion structure of the optical fiber of this first embodiment comprises a single mode optical fiber 11, a very short piece of spacer 13 of a set length one end surface of which is connected to the end surface of the single mode optical fiber 11, the refractive index of the core portion of the spacer 13 being uniform, and a very short piece of GI fiber (a graded index optical fiber the refractive index of the core portion of which varies continuously in the direction of its diameter as described above) 12 of a set length one end surface of which is connected to the other end surface of the spacer 13. In this embodiment, the single mode optical fiber 11 is optically coupled to the spacer 13 by fixing the one end surface of the spacer 13 to the end surface of the single mode optical fiber 11 by fusion splice, and likewise, the spacer 13 is optically coupled to the GI fiber 12 by fixing the one end surface of the GI fiber 12 to the other end surface of the spacer 13 by fusion splice. It is needless to say that the single mode optical fiber 11 may be optically coupled to the spacer 13 and the spacer 13 may be optically coupled to the GI fiber 12 by use of a suitable adhesive, or by use of other connecting or coupling means than the fusion splice.

The spacer 13 may be constituted by an optical fiber the refractive index of which is uniform, and in this embodiment, an optical fiber made of quartz is used as the spacer 13. The diameters of the spacer 13 and the GI fiber 12 are set to be identical with each other and with the diameter (the diameter including the clad) of the single mode optical fiber 11. These diameters are set to, for example, 125 µm.

Fig. 2 is an illustration for explaining a propagation manner of the light beam propagating through the optical fiber having the structure shown in Fig. 1. In this example, when the light beam LB advances through the GI fiber 12 from the single mode optical fiber 11, the light beam LB propagates through the GI fiber 12 as it gradually spreads and reaches the GI fiber 12 in the state of the spread light beam. In the GI fiber 12, the spread light beam LB further gradually spreads at first and thereafter is focused due to lens action of the GI fiber 12, and is emitted to the outside from the end surface of the GI fiber 12.

In the optical fiber constructed as described above, since there are two parameters one being the length of the spacer 13 and the other being the length of the GI fiber 12, it is possible to set the distance WD from the end surface of the GI fiber 12 to the beam waist position and the beam waist diameter ω independently. Accordingly, the extent of freedom to set these distance WD and beam waist diameter ω is highly increased, and the scope of designs therefor widens out. As a result, if the distance WD and the beam waist diameter ω are determined corresponding to or conforming to the specification, or kind, type and size of an optical device to be optically coupled to this optical fiber, then the lengths of the spacer 13 and the GI fiber 12 can be determined at once. Thus, the optical fiber and the optical device can be optically coupled to each other at the minimum of optical loss, which results in an improvement in the optical coupling efficiency therebetween.

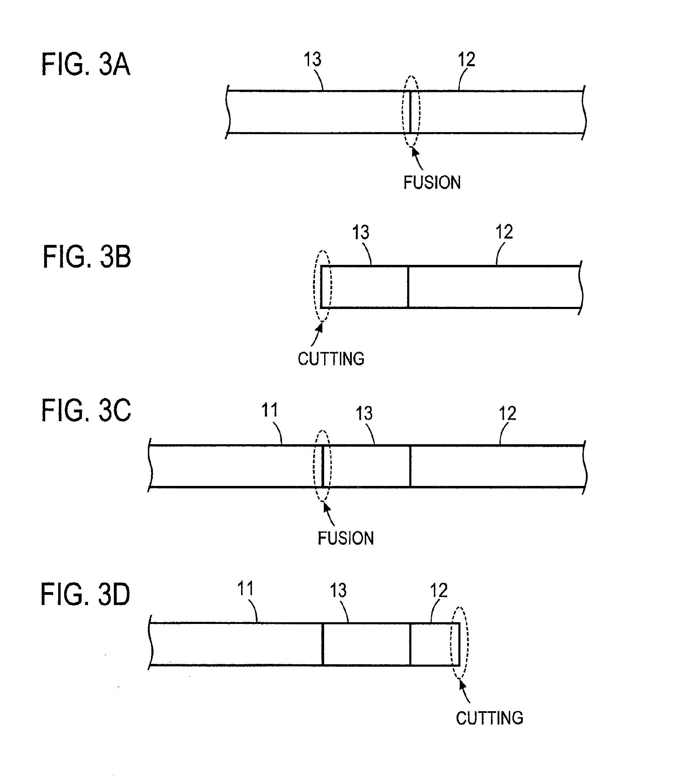

Next, a method of manufacturing the optical fiber of the first embodiment that has the structure stated above will be described in detail with reference to Fig. 3.

Figs. 3A, 3B, 3C and 3D are diagrammatical side views for explaining one embodiment of the method of manufacturing the optical fiber shown in Fig. 1 in order of process steps. At first, as shown in Fig. 3A, one end surface of a spacer 13 the outside diameter of which is identical with that of the single mode optical fiber 11 and the refractive index of which is uniform, is fixed to one end surface of a GI fiber 12 the outside diameter of which is also identical with that of the single mode optical fiber 11 by fusion splice thereby to connect the spacer 13 and the GI fiber 12 with each other. In this case, the length of each of the spacer 13 and the GI fiber 12 is set to a value sufficiently longer than a predetermined set length.

Next, as shown in Fig. 3B, the spacer 13 is cut off at a predetermined point thereof so that it has the predetermined set length using a suitable optical fiber cutting machine such as an optical fiber cutter of the type in which a stress is applied to an optical fiber to be cut. As a result, there is obtained the very short piece of spacer 13 having the set length.

Then, as shown in Fig. 3C, the end surface of the single mode optical fiber 11 is fixed to the cut end surface of the very short piece spacer 13 by fusion splice, and so the single mode optical fiber and the very short piece spacer 13 are connected to each other. Thus, the very short piece spacer 13 of the set length is connected between the single mode optical fiber 11 and the GI fiber 12.

Next, as shown in Fig. 3D, the GI fiber 12 is cut off at a predetermined point thereof so that it has the predetermined set length using a suitable optical fiber cutting machine such as an optical fiber cutter of the type in which a stress is applied to an optical fiber to be cut. As a result, there is obtained an optical fiber having its end portion structure arranged such that the very short piece spacer 13 of the set length is connected to the end surface of the single mode optical fiber 11 as well as the very short piece GI fiber 12 of the set length is connected to the end surface of the very short piece spacer 13 of the set length.

Further, the lengths of the very short piece spacer 13 and the very short piece GI fiber 12 may be usually set to a value ranging from about 0.1 mm to about 1.0 mm. In addition, the GI fiber 12 and the spacer 13 may be connected to each other by use of connecting or fixing means other than fusion splice, and likewise, the single mode optical fiber 11 and the very short piece spacer 13 may be connected to each other by use of connecting or fixing means other than fusion splice.

With the manufacturing method as described above, in the step shown in Fig. 3B, in the case of cutting the spacer 13 off so as to have the set length, the length of the spacer 13 can be measured from the fused interface between the spacer 13 and the GI fiber 12 as a datum point. Likewise, in the step shown in Fig. 3D, in the case of cutting the GI fiber 12 off so as to have the set length, the length of the GI fiber 12 can be measured from the fused interface between the spacer 13 and the GI fiber 12 as a datum point. This fused interface can be easily distinguished (recognized by one's eye) on the basis of the difference between the refractive indices of the spacer 13 and the GI fiber 12 because the refractive index of the GI fiber 12 varies continuously in the direction of its diameter, whereas the refractive index of the spacer 13 is uniform. Accordingly, it is possible to cut the spacer 13 and the GI fiber 12 off so as to have their set lengths with ease and accurately at high precision.

Moreover, since the spacer 13 and the GI fiber 12 that are sufficiently longer than their set lengths respectively are used and the connecting steps and the cutting steps as discussed above are performed, the works and/or operations thereof are easy, which results in an improvement in manufacturing efficiency.

Further, though not shown, a single mode optical fiber in which the jacket of the end potion thereof to be connected to the spacer 13 has been previously removed usually over a length of 10 mm or so is used as the single mode optical fiber 11. Similarly, though not shown, a spacer and a GI fiber in which the jacket of each of the end potions thereof to be connected to each other have been previously removed usually over a length of 10 mm or so respectively are used as the spacer 13 and the GI fiber 12, and the remaining portions of the spacer 13 and the GI fiber 12 each having the jacket thereon are cut off and removed.

In the first embodiment described above, though there has been illustrated a case that the present invention has been applied to one single mode optical fiber 11, the present invention may be also applied to, for example, a tape or ribbon-like (planar) multi-core optical fiber in which a plurality of single mode optical fibers are juxtaposed in parallel with one another and formed into one body.

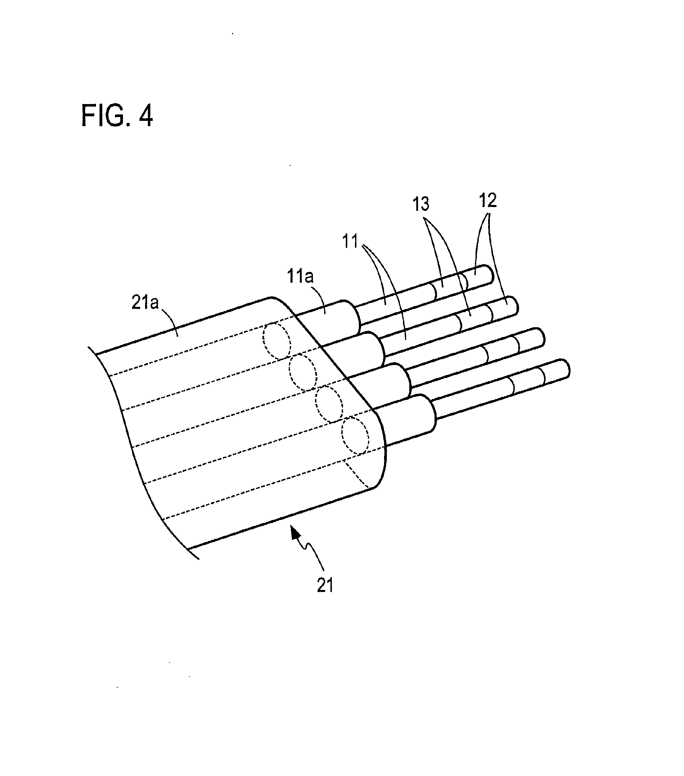

Fig. 4 is a perspective view showing a second embodiment of the optical fiber according to the present invention, and a case is shown that the present invention is applied to a tape-like four-core optical fiber 21 in which four single mode optical fibers 11 juxtaposed in parallel with one another are formed into one body by covering the jackets 11a of the juxtaposed four single mode optical fibers 11 with a second jacket 21a of generally elliptical shape in section. The end portion structure of the tape-like four-core optical fiber 21 of this second embodiment comprises four single mode optical fibers 11, four very short pieces of spacers 13 each having a set length one end surface of each of which is connected to the end surface of corresponding one of the four single mode optical fibers 11, the refractive index of the core portion of each spacer 13 being uniform, and four very short pieces of GI fibers 12 each having a set length one end surface of each of which is connected to the other end surface of corresponding one of the four spacers 13. As a result, when each light beam propagating through the corresponding single mode optical fiber 11 advances through the corresponding GI fiber 12 therefrom, as in the case of the first embodiment discussed above, it propagates through the GI fiber 12 as it gradually spreads and reaches the GI fiber 12 in the state of the spread light beam. In the GI fiber 12, the spread light beam LB further gradually spreads at first and thereafter is focused due to lens action of the GI fiber 12, and is emitted to the outside from the end surface of the GI fiber 12.

Accordingly, in the tape-like optical fiber 21 of the second embodiment, too, each single mode optical fiber 11 has two parameters one being the length of the spacer 13 and the other being the length of the GI fiber 12 as in the case of the first embodiment. Therefore, if the distance WD to the beam waist position and the beam waist diameter ω are determined corresponding to or conforming to the specification, or kind, type and size of an optical device to be optically coupled to the optical fiber, then the lengths of each spacer 13 and each GI fiber 12 can be determined at once. Thus, it is clear that the same functions and effects as in the case of the above-mentioned first embodiment can be obtained, and hence the explanation thereof will be omitted here.

In case of manufacturing the tape-like optical fiber 21 shown in Fig. 4, it is preferred that as the spacers 13 and the GI fibers 12, a tape-like four-core spacer and a tape-like four-core GI fiber each having the same construction as that of the tape-like four-core optical fiber 21 are prepared, and that connecting steps between the four spacers 13 and the four GI fibers 12, cutting steps for the four spacers 13, connecting steps between the four spacers 13 and the four single mode optical fibers 11, and cutting steps for the four GI fibers 12 may be concurrently performed, respectively, in order of the described steps. If each of the connecting steps and the cutting steps may be concurrently performed, the manufacturing cost may be reduced.

Further, in the second embodiment described above, there has been illustrated a case that the present invention has been applied to a tape-like four-core optical fiber in which four single mode optical fibers are juxtaposed in parallel with one another and formed into one body by covering the jackets of the juxtaposed single mode optical fibers with the second jacket. However, the number of the single mode optical fibers is not limited to four. In addition, the optical fiber having a uniform refractive index that forms the spacer is not limited to an optical fiber made of quartz.

As is apparent from the foregoing explanation, each of the optical fibers according to the present invention has the light focusing function as well as is capable of setting the distance WD to the beam waist position and the beam waist diameter ω independently by use of two parameters, and hence the extent of freedom to set these distance WD and beam waist diameter ω is highly increased. Moreover, the scope of designs for the distance WD and the beam waist diameter ω widens out. As a result, there is obtained a remarkable advantage that the distance WD and the beam waist diameter ω can be set to proper values at high accuracy corresponding to or conforming to the kind, type and size of an optical device to be optically coupled to this optical fiber. In addition, since the optical fiber and the optical device can be optically coupled to each other at the minimum of optical loss, there is also obtained an advantage that the optical coupling efficiency therebetween can be improved.

Moreover, in accordance with the optical fiber manufacturing method according to the present invention, in the case of cutting the spacer and the GI fiber off so that they have their set lengths, the length of each of the spacer and the GI fiber can be measured from the fused interface between the spacer and the GI fiber as a datum point. As a result, there is obtained an advantage that the spacer and the GI fiber can be cut off so as to have their set lengths with ease and accurately at high precision. In addition, since the connecting steps and the cutting steps are performed by using the spacer and the GI fiber that are sufficiently longer than their set lengths respectively, there is also obtained an advantage that the works and/or operations thereof are easy, and hence the manufacturing efficiency can be improved.

While the present invention has been described with regard to the preferred embodiments shown by way of example, it will be apparent to those skilled in the art that various modifications, alterations, changes, and/or minor improvements of the embodiments described above can be made without departing from the spirit and the scope of the present invention. Accordingly, it should be understood that the present invention is not limited to the illustrated embodiments, and is intended to encompass all such modifications, alterations, changes, and/or minor improvements falling within the scope of the invention defined by the appended claims.

## Claims

1. An optical fiber having a light converging function comprising:
a single mode optical fiber;
a very short piece of spacer having a set length, one end surface of which is connected to an end surface of said single mode optical fiber, said very short piece of spacer being constituted of an optical fiber the diameter of which is identical to that of the single mode optical fiber and the refractive index of which is uniform; and
a very short piece of graded index optical fiber having a set length, one end surface of which is connected to the other end surface of the spacer, said graded index optical fiber having its diameter identical to that of the single mode optical fiber, and having the refractive index that varies continuously in the direction of its diameter.

2. An optical fiber having a light converging function comprising:
a multi-core single mode optical fiber in which a plurality of single mode optical fibers are juxtaposed in parallel with one another and are formed into one body by covering the single mode optical fibers with a jacket;
a plurality of very short pieces of spacers each of which has one end surface connected to an end surface of corresponding one of said single mode optical fibers, said very short pieces of spacers being constituted of a plurality of optical fibers each of which has a set length, has its diameter identical to that of corresponding one of the single mode optical fibers, and has its refractive index that is uniform; and
a plurality of very short pieces of graded index optical fibers each of which has one end surface connected to the other end surface of corresponding one of said plurality of spacers, each graded index optical fiber having a set length, having its diameter identical to that of corresponding one of the single mode optical fibers, and having its refractive index that varies continuously in the direction of its diameter.

3. A method of manufacturing an optical fiber having a light converging function, said method comprising the steps of:
a first step of connecting one end surface of a spacer that is constituted by an optical fiber the refractive index of which is uniform and the length of which is sufficiently longer than a set length and one end surface of a graded index optical fiber the refractive index of which varies continuously in the direction of its diameter and the length of which is sufficiently longer than a set length with each other;
a second step of cutting said spacer off so as to have a set length;
a third step of connecting an end surface of a single mode optical fiber to the cut end surface of the spacer; and
a fourth step of cutting said graded index optical fiber off so as to have a set length.

4. A method of manufacturing an optical fiber having a light converging function, said method comprising the steps of:
a first step of connecting respective one end surfaces of a plurality of spacers that are constituted by a plurality of optical fibers the refractive index of each of which is uniform and the length of each of which is sufficiently longer than a set length and corresponding one end surfaces of a plurality of graded index optical fibers the refractive index of each of which varies continuously in the direction of its diameter and the length of each of which is sufficiently longer than a set length with each other;
a second step of cutting said plurality of spacers off so as for each spacer to have a set length;
a third step of connecting respective end surfaces of a plurality of single mode optical fibers in a multi-core single mode optical fiber in which said plurality of single mode optical fibers are juxtaposed in parallel with one another and are formed into one body by covering the single mode optical fibers with a jacket to the corresponding cut end surfaces of the plurality of spacers; and
a fourth step of cutting said plurality of graded index optical fibers off so as for each graded index optical fiber to have a set length.

5. The method as set forth in claim 4, wherein
the plurality of spacers is constituted by a multi-core optical fiber in which a plurality of optical fibers, each having its refractive index that is uniform and its length that is sufficiently longer than a set length, are juxtaposed in parallel with one another and are formed into one body by covering the plurality of optical fibers with a jacket;
the plurality of graded index optical fibers is constituted by a multi-core graded index optical fiber in which a plurality of graded index optical fibers, each having its refractive index that varies continuously in the direction of its diameter and its length that is sufficiently longer than a set length, are juxtaposed in parallel with one another and are formed into one body by covering the plurality of graded index optical fibers with a jacket; and
the plurality of spacers and the plurality of graded index optical fibers have the same multi-core structure which is the same as that of the multi-core single mode optical fiber.
